# EUROPEAN PATENT SPECIFICATION

(11) **EP 4 052 878 B1**
(45) Date of publication and mention of the grant of the patent: **06.08.2025**
(21) Application number: 22160069.5
(22) Date of filing: 03.03.2022
(51) Int. Cl.: B29B 17/00, B29B 17/02, B29B 17/04, B29L 31/50, B29L 31/52

(54) **PROCESS FOR RECYCLING SPORTS WASTE**
VERFAHREN ZUM RECYCLING VON SPORTABFÄLLEN
PROCÉDÉ DE RECYCLAGE DE DÉCHETS DE SPORT

(30) Priority: 05.03.2021 IT 202100005201
(43) Date of publication of application: 07.09.2022
(73) Proprietor: ESO RECYCLING Società Benefit a rl, 47838 Riccione (IT)
(72) Inventor: MELETIOU, Nicolas, 20089 Rozzano (IT)
(74) Representative: Lunati & Mazzoni S.r.L.

(56) References cited:
- CN-A- 102 133 806
- DE-A1- 4 433 125
- US-A1- 2011 183 559
- MARIAS BENJAMIN: "AIR coop | Footwear Recycling : from the idea to the demonstrator", 25 July 2017 (2017-07-25), pages 1 - 3, XP055856454, Retrieved from the Internet <URL:https://www.air.coop/footwear-recycling-from-the-idea-to-the-demonstrator/> [retrieved on 20211029]
- LEE MICHAEL JAMES ET AL: "An air-based automated material recycling system for postconsumer footwear products", vol. 69, 1 December 2012 (2012-12-01), AMSTERDAM, NL, pages 90 - 99, XP055856450, ISSN: 0921-3449, Retrieved from the Internet <URL:https://www.researchgate.net/publication/271560989_An_air-based_automated_material_recycling_system_for_postconsumer_footwear_products/fulltext/55db58b008aec156b9afe892/An-air-based-automated-material-recycling-system-for-postconsumer-footwear-products.pdf> [retrieved on 20211029], DOI: 10.1016/j.resconrec.2012.09.008

## Description

The present invention relates to a process for recycling sports waste, in particular running shoes or tennis balls, in particular for the purpose of producing new products, and of the type specified in claim 1.

Various processes and methods for recycling objects are currently known.

These include shoes, or other sports waste, which can be recycled to produce new raw material to be used for other purposes.

However, shoes have a very heterogeneous structure: they have an elastomer sole made of several layers of different materials, they have an upper part that includes polymeric and textile elements as well as leather elements.

The recycling of shoes can therefore be carried out by manually separating the portions of the shoe itself and shredding them.

The known technique described includes some important drawbacks.

In particular, the described operations, which are essentially carried out manually, are too cumbersome and laborious to be economically advantageous.

As a conclusion, the recycling of shoes, in particular sports shoes, is rarely carried out. A recycling process of sport shoes is known from M.J. Lee, S. Rahimifard, in "Resources, Conservation and Recycling", 69 (2012) 90-99 (XP055856450), wherein sport shoes are shredded, followed by metal separation and an aeraulic separation phase in a zig-zag drop path. Other processes are known from the article "Footwear Recycling : from the idea to the demonstrator" (XP055856454) or patents US 2011/183559 A1, CN 102 133 806 A and DE 44 33 125 A1.

In this situation, the technical task at the basis of the present invention is to devise a plant and a process for recycling sports waste capable of substantially obviating at least part of the aforementioned drawbacks.

In the context of said technical task, it is an important aim of the invention to obtain a plant and a process for recycling sports shoes which allows for adequate and economical recycling.

The technical task and the specified purposes are achieved by a process for recycling sports shoes according to claim 1.

Preferred technical solutions are disclosed in the dependent claims.

The features and advantages of the invention are hereinafter clarified by the detailed description of preferred embodiments of the invention, with reference to the appended drawings, wherein:

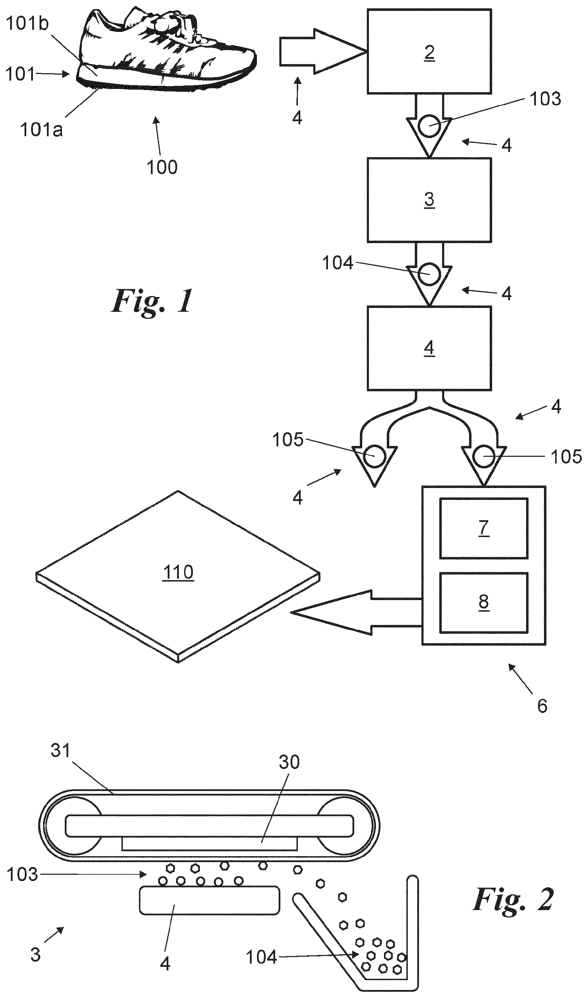

the **Fig. 1** shows a diagram of the system according to the invention; and
the **Fig. 2** illustrates a portion of the system according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the recycling plant for sports waste according to the present disclosure is globally indicated by number **1.** It is precisely suitable for recycling sports waste, in particular sports shoes **100,** more particularly the soles **101** of sports shoes 100, more particularly of running shoes or trainers.

As known, the soles **101** of the known sports shoes 100, and recycled by the method according to the invention, are, generally, composed of the following portions: an outer sole portion **101a,** preferably referred to as outsole, in direct contact with the ground generally made of polymeric materials such as carbon rubber and/or blown rubber, an intermediate sole **101b,** in contact with said outer sole 101a, preferably referred to as midsole, and generally made of polymeric materials such as thermoplastic polyurethane (TPU) and/or Ethylene Vinyl Acetate (EVA). Other materials comprising said midsoles 101b and/or outsoles 101a may be polymers such as: Polyurethane (PU), Polyester (PE), Polyamides (PA), leatherette, other polymeric materials.

The recycling plant 1 includes shredding means **2.**

In the shredding means 2 shoe soles 101 are inserted, more in details inner soles 101a, separated from the latter by simple cutting, for example manually using scissors, knives or similar tools, or even whole shoes 100.

The shredding means 2 preferably comprise a shredding machine, known per se, suitable precisely for shredding waste in order to mechanically shred it into portions of a volume preferably less than dm³, more preferably less than cm³. Said shredding machine may comprise a rotating blade, driven, for example, by a single-shaft motor preferably electrically driven. It preferably has a power of between 30 kW and 100 kW and a speed of between 50 and 100 rpm.

Preferably, the shredding machine is also equipped with a pusher, which presses the waste to be shredded against the rotating blade. It is driven by a hydraulic cylinder which makes a path of between 8 dm and 13 dm, preferably of 11 dm, which allows to obtain an effective pressure of the material on the blades.

At the outlet of the shredding machine, a grid can be found, preferably replaceable, which allows selection of the size of the shredded waste under consideration.

The grid is also openable for cleaning operations or the similar, in order to be able to easily carry out maintenance and cleaning operations.

Preferably, the shredding machine is equipped with interlocks, known in themselves, both mechanical and electrical for the purpose of safety and functionality.

The shredding machine also includes means of command and control, such as touch screens or the similar, and PLCs or mini-computers of the industrial type known by them.

At the output of the shredding machine there is therefore a shredded product **103.** The recycling plant 1 preferably comprises transport means **4** such as conveyor belts, augers and the like for transporting the products between the various means and machines described below.

The recycling plant 1 further comprises, preferably, deferrization means 3 for separating ferrous metals from non-ferrous metals and other materials in the shredded product. Preferably, the deferrization means 3 comprise magnetic means suitable for achieving, by magnetic force, said separation.

Thus, the deferrization means 3 comprise a magnet **30,** permanent or electromagnet, surmounted by a conveyor belt **31** and preferably superimposed on the transport means 4 of the shredded product 103, such as another conveyor belt.

The magnet 30 is suitable for attracting the ferrous shredded product 103 passing over the conveyor belt and constraining it to the conveyor belt 31 in order to move it away from the transport means 4.

The shredded product 103 is apt to be deprived of ferrous materials to become deferrized shredded product **104.**

Other deferrization means 3, known by themselves, may be implemented instead of the one described and may act for example by eddy currents or other means.

The recycling plant 1 also comprises aeraulic separation means **5,** known by them. Such means comprise an aeraulic separation machinery.

Preferably, the machinery comprises a speed-adjustable star valve to make it possible to set up the sorting process and feed the deferrized shredded product 104 or for the shredded product 103 into the machinery, so as to have an accurate adjustment.

The aeraulic separation machinery 5 also preferably defines a zig-zag drop path for the deferrized shredded product 104 or for the shredded product 103. The aeraulic separation machinery further comprises means for generating an air flow, from the bottom to the top, along the zigzag drop path. Said air flow, due to the zig-zag path is apt to become turbulent and to drag the lighter portions of the deferrized shredded product 104 or of the shredded product 103 to the top and convey them along a suitable duct. On the other hand, the heavier portions, for example metals, of the deferrized shredded product 104 or shredded product 103 are likely not to be dragged by the airflow and fall towards the bottom of the duct.

The aeraulic separation machinery 5 also comprises within the aeraulic separation machinery a sponge filtering system, which is known in itself, for dust abatement.

The aeraulic separation means 5, are suitable for separating light products, or heavy products, or both, which preferably constitute a second raw material 105.

The recycling plant 1 also comprises realization means **6** of second products **110,** other than sports shoes 100, obtained from the second raw material 105.

Said second products 110 are preferably anti-trauma tiles obtained from the high quality elastomers obtained from the recycling activity of the sports shoes.

The realization means 6 preferably comprise a container for the second raw material 105, equipped with an outlet metering funnel and an auger, part of the transport means 4.

The embodiment means 6 preferably comprise a mixer **7,** for mixing and homogenizing the second raw material 105 granular type and for adding water and other additives to the second raw material 105.

The realization means 6 preferably comprise moulding means **8,** comprising a press, a mould. The press is suitable for applying a pressure preferably in excess of 100 bar, and more preferably 200 bar, and possibly heating means for the material deposited in the moulds.

Said mould comprises extraction means for removing the finished product.

The operation of the recycling plant 1 described above in structural terms is described below. It defines an innovative recycling process, preferably carried out by means of the described recycling plant 1.

The procedure first comprises a phase of collecting the sports shoes 100, of the type described.

The process then comprises a separation phase. In said phase, it is performed to separate the sole 101 of the shoes from the remaining part of the shoes 100 themselves, or upper, by making a cut at a predetermined height so that the upper and sole are ejected from two separate outlets.

The process then comprises a shredding phase, which is preferably carried out by shredding means 2.

In said shredding phase, the soles 101 are shredded by means of the described shredding machine.

The shredded product 103 is appropriately selected by means of the described grid. The shredded product 103 is then preferably transported from the shredding means 2 to the deferrization means 3 by means of transport means 4 such as conveyor belts and the similar.

The process thus comprises a deferrization phase, wherein ferrous metals are separated from non-ferrous metals and other materials present in the shredded product 103, preferably by the described deferrization means 3.

In said deferrization phase, the separation is preferably carried out by magnetic means, preferably of the type described.

The deferrized shredded product is then transported, preferably by means of transport means 4 such as a conveyor belt, to an aeraulic separation phase, preferably operated by means of the described aeraulic separation means 5.

In said aeraulic separation phase the deferrized shredded product 104 is fed into the described machine and partitioned by means of a speed-adjustable star valve to make it possible to set up the selection process, so as to have an accurate regulation.

The said path is invested by a current flow of air conveyed from the bottom to the top. The air flow, due to the zigzag path, becomes turbulent. Said flow drags the lighter portions of the deferrized shredded product 104 or for the shredded product 103 to the top and conveys them along a special duct.

Conversely, the heavier portions, for example metals, of the deferrized shredded product 104 or shredded product 103 fall towards the bottom of the duct.

At the same time, the dust is abated by the filtering system, preferably of the type described.

The product leaving the aeraulic separation phase, preferably the light products, or thinking products or both, preferably constitutes a second raw material 105.

The recycling process also comprises a phase of making second products 110, preferably of the type described, obtained from the second raw material 105 and preferably by means of the realization means 6 described.

Said one embodiment phase provides that the second raw material 105 is preferably stored in the container described, is then mixed, preferably by means of the mixer 7, with water and other additives.

The admixed and mixed second raw material 105 is then moulded, preferably by means of the moulding means 8, preferably of the type described. The moulded products 110 are extracted and are ready for marketing and use.

The plant 1 and a recycling process according to the invention achieve important advantages.

Indeed, it enables a largely automatic recycling of the sports shoes 100. In particular, it has been verified that by separating the sole and using and shredding only the latter, the products have surprisingly better quality and the plant can be automated more. The recycling itself thus becomes economically viable and possible.

The invention is susceptible to variations within the scope of the inventive concept as defined by the claims.

This is because the plant may also process many different products and may also comprise various machines.

## Claims

1. Recycling process of sports waste (100) consisting of sports shoes (100) including a sole (101), comprising:
- a first separation phase wherein sports shoes (100) are separated from their soles (101),
- a shredding phase, wherein only said sole (101) is shredded and a shredded product (103) is produced,
- a deferrization phase, wherein ferrous metals are separated from non-ferrous metals and other materials present in said shredded product (103) and an iron removed shredded product is produced (104),
- an aeraulic separation phase (5), wherein said deferrized shredded product (104) is separated, depending on its specific weight, to make second raw material (105),
- a realization phase (6) of second products (110) other than said sports shoes (100) obtained from said second raw material (105), wherein
- said realization phase (6) comprises printing said second raw material (105), and wherein
- said aeraulic separation phase is performed by means of an aeraulic separation machine defining a zig-zag drop path for said deferrized shredded product (104).

2. Recycling process (1) according to the preceding claim, wherein said second products (110) are anti-trauma tiles.

3. Recycling process (1) according to any one of the preceding claims, wherein
said shredding phase takes place by means of a shredding machine comprising at least one rotary blade.

## Patentansprüche

1. Recyclingverfahren von Sportabfällen (100), bestehend aus Sportschuhen (100), die eine Sohle (101) umfassen, umfassend:
- eine erste Trennphase, in der die Sportschuhe (100) von ihren Sohlen (101) getrennt werden,
- eine Zerkleinerungsphase, in der nur die Sohle (101) zerkleinert wird und ein zerkleinertes Produkt (103) erzeugt wird,
- eine Enteisenungsphase, in der Eisenmetalle von Nicht-Eisenmetallen und von anderen Materialen, die in dem zerkleinerten Produkt (103) vorhanden sind, getrennt werden und ein eisenfreies zerkleinertes Produkt (104) erzeugt wird,
- eine aeraulische Trennphase (5), in der das enteisente zerkleinerte Produkt (104) je nach spezifischem Gewicht getrennt wird, um ein zweites Rohmaterial (105) herzustellen,
- eine Herstellungsphase (6) von zweiten Produkten (110), die sich von den Sportschuhen (100) unterscheiden und aus dem zweiten Rohmaterial (105) erhalten werden, wobei
- die Herstellungsphase (6) das Bedrucken des zweiten Rohmaterials (105) umfasst, und wobei
- die aeraulische Trennphase mittels einer aeraulischen Trennmaschine durchgeführt wird, die einen Zickzack-Gefällepfad für das enteisente zerkleinerte Produkt (104) definiert.

2. Recyclingverfahren (1) nach dem vorhergehenden Anspruch, wobei
die zweiten Produkte (110) Antitrauma-Fliesen sind.

3. Recyclingverfahren (1) nach einem der vorhergehenden Ansprüche, wobei die Zerkleinerungsphase mittels einer Zerkleinerungsmaschine durchgeführt wird, die mindestens eine rotierende Klinge umfasst.

## Revendications

1. Procédé de recyclage de déchets sportifs (100) consistant en
chaussures de sport (100) comprenant une semelle (101), comprenant :
• une première phase de séparation, dans laquelle les chaussures de sport (100) sont séparées de leurs semelles (101),
• une phase de broyage, dans laquelle seule ladite semelle (101) est broyée et un produit broyé (103) est produit,
• une phase de déferrisation, dans laquelle les métaux ferreux sont séparés des métaux non ferreux et d'autres matériaux présents dans ledit produit broyé (103) et un produit broyé déferrisé est produit (104),
• une phase de séparation aéraulique (5), dans laquelle ledit produit broyé déferrisé (104) est séparé, en fonction de son poids spécifique, afin d'obtenir une seconde matière première (105),
• une phase de réalisation (6) de seconds produits (110) autres que lesdites chaussures de sport (100) obtenus à partir de ladite seconde matière première (105), dans laquelle ladite phase de réalisation (6) comprend l'impression de ladite seconde matière première (105), et dans laquelle
• ladite phase de séparation aéraulique est réalisée au moyen d'une machine de séparation aéraulique définissant un trajet de chute en zigzag pour ledit produit broyé déferrisé (104).

2. Procédé de recyclage (1) selon la revendication précédente, dans lequel lesdits seconds produits (110) sont des dalles antichoc.

3. Procédé de recyclage (1) selon l'une quelconque des revendications précédentes, dans lequel ladite phase de broyage est réalisée au moyen d'une machine de broyage comprenant au moins une lame rotative.
